(19) Europäisches Patentamt
European Patent Office
Office européen des brevets

(11) **EP 1 930 258 B1**

(12) **EUROPÄISCHE PATENTSCHRIFT**

(45) Veröffentlichungstag und Bekanntmachung des Hinweises auf die Patenterteilung:
**27.05.2009 Patentblatt 2009/22**

(51) Int Cl.:
***B65G 39/07*** *(2006.01)*

(21) Anmeldenummer: **07023729.2**

(22) Anmeldetag: **07.12.2007**

(54) **Förderrolle**

Conveying Roller

Rouleau de transport

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **07.12.2006 DE 102006058052**

(43) Veröffentlichungstag der Anmeldung:
**11.06.2008 Patentblatt 2008/24**

(73) Patentinhaber: **Gura Fördertechnik GmbH**
**51789 Lindlar (DE)**

(72) Erfinder: **Arnold, Olaf**
**51643 Gummersbach-Strombach (DE)**

(74) Vertreter: **Füssel, Michael**
**Dr. Sturies, Eichler & Füssel**
**Patentanwaltskanzlei**
**Lönsstrasse 55**
**42289 Wuppertal (DE)**

(56) Entgegenhaltungen:
**DE-A1- 2 215 342          DE-A1- 4 141 510**
**FR-A- 1 114 495**

## Beschreibung

Die vorliegende Erfindung betrifft eine Förderrolle nach Oberbegriff des Hauptanspruchs.

Derartige Förderrollen finden in vielen Bereichen der Technik ihre Verwendung; DE-A-2215 342 beschreibt eine solche Förderrolle.

Sie werden entweder in Rollenförderen oder Bandförderen eingesetzt.

Bei Rollenförderen läuft das zu befördernde Gut, ggf. mittels eines Förderplateaus, über hintereinander angeordnete Förderrollen.

Bei der Verwendung in Bandförderern dienen die Förderrollen als Umlenkrollen.

Ein Problem derartiger Förderrollen ist die nicht zu vermeidende Relativbewegung zwischen der Oberfläche der Förderrolle und den zu fördernden Gütern.

Insoweit ist auch die Relativbewegung zwischen der Oberfläche der Förderrolle und der Umgebung, d.h. der umgebenden Luft mit heranzuziehen.

Diese Relativbewegungen können nämlich zu einer statischen Aufladung der Förderrollen führen, die letztlich zu einem elektrostatischen Entladevorgang führt, wenn z.B. eine Person sich einer derart aufgeladenen Förderolle nähert.

Es ist also Aufgabe der vorliegenden Erfindung, diesen Effekt bei einer Förderrolle zu vermeiden, die bei geringem Gewicht preiswert zu fertigen ist.

Diese Aufgabe löst die Erfindung mit den Merkmalen des Hauptanspruchs.

Aus der Erfindung ergibt sich der Vorteil, dass zwischen der Außenfläche der Förderrolle und dem Rollenboden ein zuverlässig elektrisch leitender Kontakt hergestellt wird, der eventuelle statische Aufladungen an der Oberfläche der Förderrolle zuverlässig verhindert.

Über den elektrischen Kontakt zwischen der Außenfläche der Förderrolle und dem Rollenboden wird nämlich eventuell erzeugte elektrostatische Aufladung zuverlässig in das Maschinengestell und von dort in die Erde abgeleitet.

Dabei kommt es insbesondere auf einen dauerhaften Kontakt zwischen der Oberfläche der Förderrolle und dem seitlich eingesetzten Rollenboden an, weil nur auf diese Weise die sich an der Oberfläche der Förderrolle ansammelnden elektrostatischen Aufladungen zuverlässig in das Maschinengestell ableiten lassen.

Die Verwendung eines elektrisch leitfähigen Kunststoffs anstelle einer rein metallischen Oberfläche der Förderrolle bietet darüber hinaus den Vorteil, dass die elektrische Leitfähigkeit des Kunststoffs entsprechend den Merkmalen des Anspruchs 2 eingestellt werden kann.

Es handelt sich hierbei um Widerstandsbereiche, die unter Berücksichtigung üblicher Umgebungstemperaturen und Luftfeuchtigkeiten eingehalten werden sollten, damit einerseits die Entladung einer statisch aufgeladenen Förderrolle überhaupt stattfindet und andererseits so langsam erfolgt, dass kein Funkenflug entsteht.

Zu diesem Zweck wird aus Gründen der Reproduzierbarkeit auf ein genormtes Verfahren zurückgegriffen, bei welchem der sogenannte Punkt-Zu-Punkt-Widerstand zwischen zwei 30 cm voneinander entfernten Punkten auf der Oberfläche einer derartigen Förderrolle zu messen ist.

Für den Fall einer Förderrolle, die keine zwei mindestens 30 cm voneinander beabstandeten Punkte bietet, kann dieses Messverfahren ersatzweise an einer entsprechend langen Probe desselben Kunststoffs durchgeführt werden.

Dabei wird die Einhaltung des vorteilhaften oben genannten Widerstandbereichs auch abhängig sein von der Dicke der elektrisch leitfähigen Kunststoffschicht.

Zu diesem Zweck sollte der Rollenkörper der erfindungsgemäßen Förderrolle einen inneren, formgebenden Rollenkörper aufweisen, der auf seiner Außenseite mit der elektrisch leitfähigen Schicht aus besagtem Kunststoff zu beschichten ist.

Der formgebende innere Rollenkörper sollte zur Erzielung hoher Stabilität eine relativ große Wandungsstärke aufweisen. Die Dicke der elektrisch leitfähigen Schicht kann daher relativ klein sein, da diese nicht zur Festigkeit beitragen muss.

Dabei kann der Rollenkörper ebenfalls aus Kunststoff bestehen.

Die elektrisch leitfähige Schicht kann insoweit aufgespritzt, aufextrudiert oder coextrudiert sein.

Gleichsam ist es denkbar, die elektrisch leitfähige Schicht einfach überzuziehen, aufzuschrumpfen oder ähnliches.

Die erfindungsgemäße Förderrolle kann beidseitig oder einseitig eingespannt sein.

In jedem Fall sollten die Rollenböden seitlich in den Rollenmantel eingepresst werden.

Um die elektrisch leitfähige Verbindung herzustellen, wird vorgeschlagen, einen Rollenboden mit Außenbund zu verwenden, dessen Außendurchmesser mit dem Durchmesser der elektrisch leitfähigen Außenfläche übereinstimmt oder diese geringfügig überragt.

Der elektrische Kontakt kommt dann zwischen der dem Rollenmantel zugewandten Stirnseite des Außenbundes und der gegenüberliegenden Stirnfläche des Rollenmantels dort zustande, wo sich die elektrisch leitfähige Schicht befindet.

Dies dürfte in einem äußeren Ringbereich des Außenbundes erfüllt sein.

Zur Unterstützung eines unter allen Betriebsbedingungen sicheren Kontakts und insbesondere unter Berücksichtigung eventueller Fertigungstolerenzen wird ergänzend vorgeschlagen, dass außerhalb des äußeren Ringbereichs, wo der elektrische Kontakt stattfindet, der im Durchmesser kleinere Ringbereich kontaktfrei zum Rollenmantel ist.

Die kann durch eine hinterschnittene Zone erreicht werden, die sich zwischen der dem Rollenmantel zugewandten Stirnseite des Außenbundes und der gegenüberliegenden Stirnfläche des Rollenmantels ergibt.

Hierfür sind Ausführungsbeispiele gegeben.

Wird darüber hinaus die Rollenachse aus Stahl gefertigt, und ggf. das Maschinengestell, sind deren elektrische Widerstände in der gesamten Widerstandskette zwischen Rollenmantel, Rollenboden, Lager, Achse, Maschinengestell und Erde praktisch vernachlässigbar gering.

Innerhalb der im Anspruch 2 genannten Widerstandsbereiche kann insoweit dann die Verwendung der erfindungsgemäßen Förderrolle auch in einer sogenannten elektrostatischen Schutzzone erfolgen.

Im Folgenden wird die Erfindung anhand von Ausführungsbeispielen näher erläutert.

Es zeigen:

Fig.1    ein erstes Ausführungsbeispiel für eine erfindungsgemäße Förderrolle;

Fig.2    mögliches Detail der Kontaktzone zwischen Rollenboden und Rollenmantel gem. Fig.1;

Fig.3    andere Ausgestaltung des Details gem. Fig.2;

Fig.4    weitere Ausgestaltungsmöglichkeit des Details gem. Fig.2

Sofern im Folgenden nichts anderes gesagt ist, gilt die folgende Beschreibung stets für alle Figuren.

Die Figuren zeigen eine Förderrolle 1.

Die Förderrolle weist einen Rollenmantel 2 auf, der sich entlang der Rollenachse geradzylindrisch erstreckt.

Am Ende des Rollenmantels 2 befindet sich ein dort im Rollenmantel 2 befestigter Rollenboden 3.

Der Rollenboden 3 nimmt in seinem Innendurchmesser ein Lager auf, welches der Aufnahme einer Rollenachse 5 dient.

Die Rollenachse 5 dient der Befestigung der Förderrolle 1 an einem Maschinengestell 6.

Eine derartige Förderrolle 1 kann als auskragende Förderrolle einseitig gelagert sein oder auch beidseitig.

Wesentlich ist, dass die Außenfläche 7 der Förderrolle 1 aus einem elektrisch leitfähigem Kunststoff besteht, der im elektrischen Kontakt zu dem zumindest einen Rollenboden 3 steht.

Dies bedeutet, dass der elektrisch leitfähige Kunststoff, der die Außenfläche der Förderrolle 1 bildet, in allen Drehstellungen der Förderrolle und unter allen Belastungssituationen stets einen elektrisch leitfähigen Kontakt zum Rollenboden 3 aufweisen muss, so dass etwaige auf der Oberfläche der Förderrolle entstehende elektrostatische Ladungen über den elektrischen Kontakt in den Rollenboden, von dort in das Lager 4 und die Rollenachse 5 sowie in das Maschinengestell 6 abgeleitet werden können, welches naturgemäß geerdet ist.

Dabei sollte die elektrische Leitfähigkeit des Kunststoffs so eingestellt sein, dass unter den für die Förderrolle zu erwartenden Betriebsbedingungen, insbesondere der Umgebungstemperatur und der Luftfeuchtigkeit für zwei 30 cm voneinander beabstandete Punkte 8,9 auf der Außenfläche 7 ein Widerstand $R^1$ messbar ist, für den gilt:

$$10^4 \; <= \; R^1 \; <= \; 10^{10} \; \text{Ohm,}$$

in einem Ausführungsbeispiel z.B. 1,3 bis 1,6 x $10^5$ Ohm.

Darüber hinaus sollte zugleich für den Widerstand $R^2$, der zwischen einem Punkt 8;9 auf der Kunststoffoberfläche und der Rollenachse 5 gemessen wird, gelten, 7,5 X $10^5$ <= $R^2$ <= $10^9$ Ohm, z.B. 5 x $10^6$ Ohm.

Zu diesem Zweck wird vorgeschlagen, dass die Leitfähigkeit des Kunststoffs eingestellt wird durch Zumischung elektrisch leitfähiger Partikel, z.B. Graphit oder Ruß, in einer Menge, so dass die Kunststoffschicht in der zu erwartenden Dicke tatsächlich auch einen Widerstand nach obiger Maßgabe aufweist.

Dies gilt in gleichem Maße für den Widerstand zur Rollenachse bzw. zum Maschinengestell, welches naturgemäß geerdet ist.

Der Widerstand $R^2$ ist daher als derjenige Widerstand zu verstehen, den ein beliebiger Punkt auf der Rollenoberfläche zur Erde hat.

Besonderes Augenmerk ist noch zu richten auf den Abstand 10, welchen die beiden Messpunkte 8,9 voneinander haben sollen.

Ergibt sich aus der Rollenkonstruktion, dass die Förderrolle 1 keine ausreichende Länge besitzt, kann ein Ersatzversuch gefahren werden mit einem entsprechend langem Kunststoffmaterial (mindestens 30 cm) gleicher Dicke und Zusammensetzung wie die elektrisch leitfähige Schicht.

Die Figuren zeigen darüber hinaus einen zweischaligen Rollenmantel 2.

Dieser besteht aus einem inneren Rollenkörper 11, der aus seiner Außenseite mit der elektrisch leitfähigen Schicht 12 aus entsprechendem Kunststoff beschichtet ist.

Dabei fällt auf, dass die Dicke der Beschichtung 12 erheblich kleiner als die Wandstärke des inneren Rollenkörpers 11 sein kann.

Es wird insoweit vorgeschlagen, den inneren Rollenkörper 11 aus einem hinreichend stabilen aber preiswerten Kunststoff zu fertigen, während die elektrisch leitfähige Beschichtung dann entsprechend dünn ausgeführt werden kann, da sie keine Festigkeitseigenschaften der Förderrolle übernehmen muss.

Der innere Rollenkörper 11 kann daher ebenfalls aus Kunststoff bestehen, nicht jedoch aus elektrisch leitfähigem Material.

Der Grundgedanke der Erfindung wird auf diese Weise beibehalten, weil über den relativ hohen Punkt-zu-Punkt-Widerstand die mögliche Entladung des Rollenmantels 2 möglichst langsam erfolgen soll und nicht schlagartig, um Funkenbildung oder die anderweitige Beschädigung elektrostatisch empfindlicher Bauteile zu vermeiden.

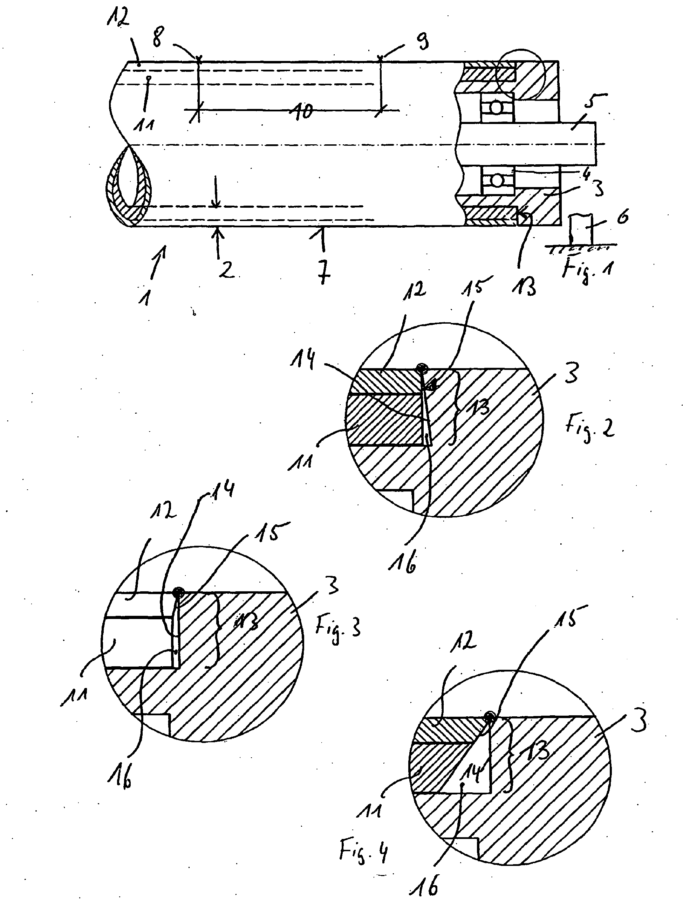

Darüber hinaus zeigt Fig.1 dass der Rollenboden 3 seitlich in den Rollenmantel 2 eingepresst ist.

Zwischen Rollenmantel 2 und Rollenboden 3 besteht daher ein Presssitz, der unter normalen Betriebsbedingungen beibehalten wird.

Zur Erzielung einer zuverlässigen elektrischen Verbindung zwischen dem Rollenboden 3 und dem Rollenmantel 2 weist der Rollenboden einen Außenbund 13 auf, dessen Außendurchmesser praktisch mit dem Durchmesser der elektrisch leitfähigen Außenfläche des Rollenmantels 2 übereinstimmt, wobei der Außenbund 13 mit seiner dem Rollenmantel zugewandten Stirnseite 14 dicht an der ihm gegenüberliegenden Stirnfläche 15 der elektrisch leitfähigen Schicht 12 anliegt.

Es kommt also hier auf den ständigen elektrischen Kontakt zwischen der elektrisch leitfähigen Schicht 12 und dem Rollenboden 3 an.

Dieser Kontakt wird gemäß Fig.2-4 dadurch sichergestellt, dass zwischen der Stirnseite 14 und der Stirnfläche 15 lediglich ein schmaler Ringbereich den gemeinsamen Kontakt herstellt, während der im Durchmesser kleinere Ringbereich der Stirnseite 14 kontaktfrei zum Rollenmantel 2 ist.

Wie insbesondere die Fig.2-4 zeigen, wird der elektrische Kontakt praktisch über einen sehr schmalen umlaufenden, praktisch linienförmigen Bereich herbeigeführt und der kontaktfreie Bereich durch eine hinterschnittene Zone 16 erzeugt, die sich zwischen der Stirnfläche 15 des Rollenmantels 2 und der Stirnseite 14 des Außenbundes 13 einstellt.

Durch das Einpressen des Rollenbodens 3 in den Rollenmantel 2 erfolgt daher ein fester Sitz im Rollenmantel 2 und ein ebenso fester und wackelfreier elektrischer Kontakt zwischen der elektrisch leitfähigen Schicht 12 und dem Rollenboden 2, der seinerseits die elektrischen Ströme von dem Rollenmantel 2 über das Lager 4 an das Maschinengestell ableiten kann.

Zu diesem Zweck wird noch vorgeschlagen, Rollenachse 5 und das Maschinengestell aus Stahl zu fertigen, wobei das Maschinengestell selbstverständlich geerdet sein muss.

Darüber hinaus zeigt Fig.1 noch die Besonderheit, dass für das Lager 4 ein Wälzkörperlager verwendet wird.

Auch insoweit dient das Wälzkörperlager der Erfindung, da über das Wälzkörperlager die elektrische Ableitung sichergestellt ist.

Bezugszeichenliste

1 Förderrolle
2 Rollenmantel
3 Rollenboden
4 Lager
5 Rollenachse
6 Maschinengestell
7 Außenfläche
8 erster Punkt
9 zweiter Punkt
10 Abstand
11 innerer Rollenkörper
12 elektrisch leitfähige Schicht
13 Außenbund
14 Stirnseite von 13
15 Stirnfläche von 12
16 hinterschnittene Zone

**Patentansprüche**

1. Förderrolle (1) mit einem elektrisch sowohl leitend beschichteten als auch geerdeten Rollenmantel (2) und zumindest einem seitlich eingesetzten Rollenboden (3) in dem ein Lager (4) sitzt, welches eine Rollenachse (5) aufnimmt, die ihrerseits an einem Maschinengestell (6) anbringbar ist und eine Außenfläche (7) der Förderrolle (1) von einem elektrisch leitfähigen Kunststoff gebildet wird **dadurch gekennzeichnet, dass** die Außenfläche (7) der Förderrolle (1) wenigstens punktuell sowohl im mechanischen als auch im elektrischen Kontakt mit einem Außenbund (13) des Rollenbodens steht.

2. Förderrolle (1) nach Anspruch 1, **dadurch gekennzeichnet, dass** die elektrische Leitfähigkeit des Kunststoffs so eingestellt ist, dass unter den zu erwartenden Betriebsbedingungen für den Widerstand ($R^1$) zwischen zwei 30 cm (10) beabstandeten Punkten (8,9) auf der Kunststoffoberfläche gilt: $10^4 <= R^1 <= 10^{10}$ Ohm und zugleich für den Widerstand $R^2$ zwischen einem Punkt auf der Kunststoffoberfläche und der Rollenachse: $7,5 \times 10^5 <= R^2 <= 10^9$.

3. Förderrolle (1) nach Anspruch 1 oder 2, **dadurch gekennzeichnet, dass** der Rollenmantel (2) einen inneren Rollenkörper (11) aufweist, der außen mit einer elektrisch leitfähigen Schicht (12) aus dem elektrisch leitfähigen Kunststoff beschichtet ist.

4. Förderrolle (1) nach Anspruch 3, **dadurch gekennzeichnet, dass** die Dicke der elektrisch leitfähigen Schicht (12) kleiner als die Wandstärke des inneren Rollenkörpers (11) ist.

5. Förderolle (1) nach Anspruch 3 oder 4, **dadurch gekennzeichnet, dass** der innere Rollenkörper (11) ebenfalls aus Kunststoff aber nicht aus elektrisch leitfähigem Material besteht.

6. Förderrolle (1) nach einem der Ansprüche 1 bis 5, **dadurch gekennzeichnet, dass** der Rollenboden (3) seitlich in den Rollenmantel (2) eingepresst ist.

7. Förderrolle (1) nach einem der Ansprüche 1 bis 6, **dadurch gekennzeichnet, dass** der Rollenboden (3) einen Außenbund (13) aufweist, dessen Außendurchmesser mit dem Durchmesser der elektrisch leitfähigen Außenfläche (7) übereinstimmt und der an seiner dem Rollenmantel (2) zugewandten Stirnseite (14) einen äußeren Ringbereich aufweist, welcher an der gegenüberliegenden Stirnfläche (15) der elektrisch leitfähigen Schicht (12) anliegt.

8. Förderrolle (1) nach Anspruch 7, **dadurch gekennzeichnet, dass** der im Durchmesser kleinere Ringbereich der dem Rollenmantel (2) zugewandten Stirnseite (14) kontaktfrei zum Rollenmantel (2) ist.

9. Förderrolle (1) nach Anspruch 8, **dadurch gekennzeichnet, dass** der kontaktfreie Bereich durch eine hinterschnittene Zone (16) zwischen der Stirnfläche (15) des Rollenmantel (2) und/oder der Stirnseite (14) des Außenbundes (13) gebildet wird.

10. Förderrolle (1) nach einem der Ansprüche 1 bis 9, **dadurch gekennzeichnet, dass** Rollenachse (5) und ggf. Maschinengestell aus Stahl sind.

11. Förderrolle (1) nach einem der Ansprüche 1 bis 10, **dadurch gekennzeichnet, dass** das Lager als Wälzkörperlager ausgeführt ist.

## Claims

1. Conveying roller (1) having a roller casing (2) which in electrical terms is both conductively coated and earthed, and at least one laterally inserted roller base (3), in which a bearing (4) is seated which receives a roller spindle (5) which for its part can be mounted on a machine frame (6), and an outer surface (7) of the conveying roller (1) is formed by an electrically conductive synthetic material, **characterised in that** at least at points the outer surface (7) of the conveying roller (1) is in both mechanical and electrical contact with an outer collar (13) of the roller base.

2. Conveying roller (1) as claimed in claim 1, **characterised in that** the electrical conductivity of the synthetic material is adjusted such that under the operating conditions to be expected for the resistance ($R^1$) between two 30 cm (10) spaced-apart points (8, 9) on the synthetic material surface the following applies: $10^4 <= R^1 <= 10^{10}$ Ohm and at the same time for the resistance $R^2$ between a point on the synthetic material surface and the roller spindle the following applies: $7.5 \times 10^5 <= R^2 <= 10^9$.

3. Conveying roller (1) as claimed in claim 1 or 2, **characterised in that** the roller casing (2) comprises an inner roller body (11) which is externally coated with an electrically conductive layer (12) consisting of the electrically conductive synthetic material.

4. Conveying roller (1) as claimed in claim 3, **characterised in that** the thickness of the electrically conductive layer (12) is less than the wall thickness of the inner roller body (11).

5. Conveying roller (1) as claimed in claim 3 or 4, **characterised in that** the inner roller body (11) likewise consists of synthetic material but not of electrically conductive material.

6. Conveying roller (1) as claimed in any one of claims 1 to 5, **characterised in that** the roller base (3) is pressed laterally into the roller casing (2).

7. Conveying roller (1) as claimed in any one of claims 1 to 6, **characterised in that** the roller base (3) comprises an outer collar (13) whose outer diameter corresponds to the diameter of the electrically conductive outer surface (7) and which comprises on its end side (14) facing towards the roller casing (2) an outer ring region which lies against the opposite-lying end surface (15) of the electrically conductive layer (12).

8. Conveying roller (1) as claimed in claim 7, **characterised in that** the smaller diameter ring region of the end side (14) facing towards the roller casing (2) does not come into contact with the roller casing (2).

9. Conveying roller (1) as claimed in claim 8, **characterised in that** the contact-free region is formed by means of an undercut zone (16) between the end surface (15) of the roller casing (2) and/or the end side (14) of the outer collar (13).

10. Conveying roller (1) as claimed in any one of claims 1 to 9, **characterised in that** the roller spindle (5) and optionally the machine frame are made from steel.

11. Conveying roller (1) as claimed in any one of claims 1 to 10, **characterised in that** the bearing is designed as a rolling body bearing.

## Revendications

1. Rouleau de transport (1) comprenant un corps cylindrique (2) qui est à la fois couvert d'un revêtement conducteur d'électricité, et mis à la terre, et au moins un fond de rouleau (3) qui est placé sur le côté et dans lequel est installé un palier (4) recevant un axe de rouleau (5) qui est lui-même apte à être monté sur un châssis de machine (6), une surface extérieure (7) du rouleau de transport (1) étant formée par une matière plastique conductrice d'électricité, **caractérisé en ce que** ladite surface extérieure (7), au moins ponctuellement, est en contact à la fois mécanique et électrique avec une embase extérieure (13) du fond du rouleau.

2. Rouleau de transport (1) selon la revendication 1, **caractérisé en ce que** la conductibilité électrique de la matière plastique est calculée pour que dans les conditions de fonctionnement à prévoir, on ait pour la résistance ($R^1$) entre deux points (8, 9) espacés de 30 cm (10) sur la surface en matière plastique : $10^4 <= R^1 <= 10^{10}$ Ohm et en même temps pour la résistance $R^2$ entre un point de la surface en matière plastique et l'axe de rouleau : $7,5 \times 10^5 <= R^2 <= 10^9$.

3. Rouleau de transport (1) selon la revendication 1 ou 2, **caractérisé en ce que** le corps cylindrique (2) comporte un corps de rouleau intérieur (11) qui est revêtu, sur l'extérieur, d'une couche conductrice d'électricité (12) composée de la matière plastique conductrice d'électricité.

4. Rouleau de transport (1) selon la revendication 3, **caractérisé en ce que** l'épaisseur de la couche conductrice d'électricité (12) est inférieure à l'épaisseur de paroi du corps de rouleau intérieur (11).

5. Rouleau de transport (1) selon la revendication 3 ou 4, **caractérisé en ce que** le corps de rouleau intérieur (11) est lui aussi en matière plastique, mais pas en matière conductrice d'électricité.

6. Rouleau de transport (1) selon l'une des revendications 1 à 5, **caractérisé en ce que** le fond de rouleau (3) est enfoncé par le côté dans le corps cylindrique (2).

7. Rouleau de transport (1) selon l'une des revendications 1 à 6, **caractérisé en ce que** le fond de rouleau (3) présente une embase extérieure (13) dont le diamètre extérieur correspond au diamètre de la surface conductrice d'électricité (7) et qui présente, sur sa face frontale (14) tournée vers le corps cylindrique (2), une zone annulaire extérieure qui est appliquée contre la surface frontale (15), opposée, de la couche conductrice d'électricité (12).

8. Rouleau de transport (1) selon la revendication 7, **caractérisé en ce que** la zone annulaire de plus petit diamètre de la face frontale (14) tournée vers le corps cylindrique (2) n'est pas en contact avec le corps cylindrique (2).

9. Rouleau de transport (1) selon la revendication 8, **caractérisé en ce que** la zone sans contact est formée par une zone contre-dépouillée (16) entre la surface frontale (15) du corps cylindrique (2) et/ou la face frontale (14) de l'embase extérieure (13).

10. Rouleau de transport (1) selon l'une des revendications 1 à 9, **caractérisé en ce que** l'axe de rouleau (5) et éventuellement le châssis de machine sont en acier.

11. Rouleau de transport (1) selon l'une des revendications 1 à 10, **caractérisé en ce que** le palier est conçu comme un palier à roulement.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2215342 A